# EUROPÄISCHE PATENTANMELDUNG

(11) **EP 1 442 871 A1**
(43) Veröffentlichungstag der Anmeldung: **04.08.2004**
(21) Anmeldenummer: 03028785.8
(22) Anmeldetag: 13.12.2003
(51) Int. Cl.: B29C 67/24, C08K 3/22, C08K 5/52

(54) **Formbare Masse, die zum Herstellen von Formteilen aushärtbar ist, und aus einer solchen Masse hergestelltes Formteil**

(30) Priorität: 28.01.2003 DE 10304175
(71) Anmelder: Schock GmbH, 73614 Schorndorf (DE)
(72) Erfinder: Hoch, Klaus, Dr., 94209 Regen (DE); Kirschbaum, Martin, 71336 Waiblingen (DE); Geier, Josef, 94539 Grafling (DE); Pähl, Matthias, 73614 Schorndorf (DE)
(74) Vertreter: Patentanwälte Bartels und Partner

(57) **Zusammenfassung**

Formbare Masse (7), die zum Herstellen von Formteilen aushärtbar ist, wobei die Masse (7) ein aushärtbares Kunstharz (8) aufweist und mindestens einen in das Kunstharz (8) eingelagerten partikelförmigen anorganischen Füllstoff (9,10) aufweist, dadurch gekennzeichnet, daß im ausgehärteten Zustand der Masse (7) mindestens ein Teil (10) des anorganischen Füllstoffs (9,10) bei Temperaturerhöhung noch unterhalb der Zersetzungstemperatur des Kunstharzes (8) brandhemmend chemisch reaktiv ist, daß die Masse (7) weiterhin mindestens eine phosphorhaltige Komponente (11,12) aufweist, und daß die phosphorhaltige Komponente (11,12) im ausgehärteten Zustand der Masse (7) bei Temperaturerhöhung noch unterhalb der Zersetzungstemperatur des Kunstharzes (8) brandhemmend chemisch reaktiv ist.

## Beschreibung

Die Erfindung betrifft eine formbare Masse, die zum Herstellen von Formteilen aushärtbar ist, gemäß dem Oberbegriff des Anspruchs 1 sowie ein aus einer solchen Masse hergestelltes Formteil.

Aus der EP 0 361 101 B2 ist ein Verfahren zur Herstellung von Formteilen bekannt, bei dem ein Kunstharz, insbesondere ein Acrylharz, mit darin eingelagerten anorganischen Füllstoffpartikeln in einer Form thermisch polymerisiert und dadurch ausgehärtet wird. Als anorganischer Füllstoff wird dabei insbesondere Quarz verwendet mit einem Anteil von typisch mehr als 50 Gew. % bezogen auf die aushärtbare Masse. Die so hergestellten Formteile, insbesondere Spülbecken, weisen eine besonders hohe mechanische Widerstandsfähigkeit auf und werden von der Anmelderin unter den Marken CRISTALITE oder SILGRANIT vertrieben.

Aus der WO 99/04972 ist ein Verfahren zur Herstellung von plattenförmigen Formteilen bekannt, bei dem ebenfalls ein Kunstharz mit darin eingelagerten anorganischen Füllstoffpartikeln, allerdings mit einem vergleichsweise geringen Anteil, ausgehärtet wird. Als anorganischer Füllstoff wird dabei insbesondere Aluminiumtrihydroxid (ATH) verwendet. Zusätzlich zu dem anorganischen Füllstoff wird noch ein Füllmaterial in Form eines Granulats verwendet, welches auch als Crunchies bezeichnet wird und welches aus einem bereits ausgehärteten Kunstharz mit darin eingelagerten anorganischen Füllstoffpartikeln besteht. Die so hergestellten Formteile sind besonders gut spanend bearbeitbar und werden von der Anmelderin unter der Marke CRISTALAN vertrieben.

Die plattenförmigen Formteile werden üblicherweise als Tisch- oder Arbeitsplatten verwendet. Insbesondere beim Einsatz derartiger Formteile als Verkleidungselement, Wandelement, Raumteiler oder dergleichen sind besondere Anforderungen an den Brandschutz zu stellen, weil durch die vertikale Ausrichtung derartiger Formteile die Brandschutzwirkung trotz eines verhältnismäßig hohen Anteils unbrennbarer Füllstoffe in der ausgehärteten Masse unter Umständen nicht ausreichend ist.

Der Erfindung liegt das Problem zugrunde, eine formbare Masse, die zum Herstellen von Formteilen aushärtbar ist, sowie ein aus einer solchen Masse hergestelltes Formteil bereitzustellen, welche die Nachteile des Standes der Technik überwinden. Insbesondere soll die formbare Masse gewährleisten, daß die damit hergestellten Formteile die vom Anwendungsfall abhängigen Anforderungen an den Brandschutz erfüllen. Darüber hinaus soll die formbare Masse gut verarbeitbar sein und die hergestellten Formteile sollen eine ausreichende mechanische und/oder chemische Stabilität aufweisen.

Das Problem ist durch die im Anspruch 1 bestimmte Masse sowie durch das im nebengeordneten Anspruch bestimmte Formteil gelöst.
Besondere Ausführungsarten sind in den Unteransprüchen bestimmt.

Erfindungsgemäß ist bei einer formbaren Masse, die zum Herstellen von Formteilen aushärtbar ist, wobei die Masse ein aushärtbares Kunstharz aufweist und mindestens einen in das Kunstharz eingelagerten partikelförmigen anorganischen Füllstoff aufweist, dadurch gelöst, daß im ausgehärteten Zustand der Masse mindestens ein Teil des anorganischen Füllstoffs bei Temperaturerhöhung noch unterhalb der Zersetzungstemperatur des Kunstharzes brandhemmend chemisch reaktiv ist, daß die Masse weiterhin mindestens eine phosphorhaltige Komponente aufweist, und daß die phosphorhaltige Komponente im ausgehärteten Zustand der Masse bei Temperaturerhöhung noch unterhalb der Zersetzungstemperatur des Kunstharzes brandhemmend chemisch reaktiv ist.

Vorzugsweise besteht das Kunstharz aus einem Acrylharz, welches wiederum polymerisierbare Acrylsäuremonomere oder deren Derivate aufweist, insbesondere auch einen Anteil an Acrylsäureprepolymere aufweisen kann. Das Aushärten erfolgt vorzugsweise durch thermisch induzierte Polymerisation. Typische Temperaturen liegen dabei zwischen 80° und 150°, insbesondere bei etwa 120°. Die Masse wird zum Aushärten in eine Form eingefüllt, die im einfachsten Fall aus zwei planparallelen Platten bestehen kann. Der während des Formvorganges anzuwendende Flächendruck kann je nach Zusammensetzung der formbaren Masse, insbesondere je nach Konsistenz oder Viskosität, sehr unterschiedlich sein und beispielsweise zwischen 2 und 100 bar liegen.

Durch den Anteil, den Werkstoff, die Partikelgröße, die Partikelform und/oder die Farbe des anorganischen Füllstoffs können die mechanische und/oder chemische Widerstandfähigkeit sowie die optische und/oder haptische Erscheinung der hergestellten Formteile eingestellt werden. Die aushärtbare Masse kann mehrere anorganische Füllstoffe aufweisen. Insbesondere kann ein erster anorganischer Füllstoff in Partikelform unmittelbar in das Kunstharz eingelagert sein. Ein zweiter anorganischer Füllstoff kann eingelagert sein in ein Füllmaterial, das aus einem ausgehärteten Harz gebildet ist und als Granulat oder als Crunchies in das noch auszuhärtende Kunstharz eingelagert wird. Für den ersten und den zweiten anorganische Füllstoff kann auch der gleiche Werkstoff eingesetzt werden. Bei den Crunchies kann es sich insbesondere um bereits ausgehärtetes Harz handeln, das ansonsten im wesentlichen identisch zusammengesetzt ist wie das die Crunchies umgebende Kunstharz.

Typische anorganische Füllstoffe sind beispielsweise Quarz (SiO2) mit einer Mohshärte von 7 oder Aluminiumtrihydroxid (ATH) mit einer Mohshärte von 3. Von der Anmelderin wird zur Herstellung von unter der Marke CRISTALITE angebotenen Formteilen eine Masse verwendet, die neben dem Kunstharz einen hohen Anteil an dem harten anorganischen Füllstoff Quarz aufweist und darüberhinaus keine Crunchies und üblicherweise auch keinen weichen Füllstoff aufweist. Außerdem wird von der Anmelderin zur Herstellung von unter der Marke CRISTALAN angebotenen Formteilen eine Masse verwendet, die neben dem Kunstharz einen hohen Anteil an dem weichen anorganischen Füllstoff Aluminiumtrihydroxid aufweist, und zwar sowohl unmittelbar im Kunstharz als auch in den Crunchies.

Jedenfalls ein Teil des anorganischen Füllstoffes ist bei Temperaturerhöhung brandhemmend chemisch reaktiv und zwar noch unterhalb der Zersetzungstemperatur des Kunstharzes, das heißt unterhalb der Temperatur, bei der das Kunstharz zu brennen anfängt, weiterbrennt oder jedenfalls brennbare Stoffe freisetzt. Übliche Zersetzungstemperaturen liegen bei etwa 300 Grad Celsius. Vorzugsweise wird der anorganische Füllstoff daher bei etwa 250 Grad Celsius oder bereits darunter chemisch reaktiv.

Als anorganischer Füllstoff kann beispielsweise ein thermisch dehydrationsfähiger Füllstoff verwendet werden, d.h. ein Füllstoff, der bei Temperaturerhöhung Wasser abspaltet, wie beispielsweise Gips, Magnesiumhydroxid, Hydromagnesit, oder insbesondere Aluminiumtrihydroxid (ATH). Im Brandfall wird von diesem Füllstoff Wasser abgespalten, wodurch die Brandzone gekühlt wird. Der Anteil dieses dehydrationsfähigen Füllstoffes beträgt bei der CRISTALITE Masse, die ansonsten keinen dehydrationsfähigen Füllstoff enthält, mindestens 5 Gew. % bezogen auf die Masse des hergestellten Formteils, vorzugsweise mindestens 8 Gew. % und insbesondere etwa 11 Gew. %. Bei der CRISTALAN Masse beträgt der Anteil des dehydrationsfähigen Füllstoffs mindestens 30 Gew. % bezogen auf die Masse des hergestellten Formteils, vorzugsweise mindestens 50 Gew. % und insbesondere etwa 60 Gew. %. Ein zu hoher Anteil des dehydrationsfähigen Füllstoffes kann zu einer Erhöhung der Viskosität der aushärtbaren Masse führen, die dadurch schwieriger verarbeitbar ist. In der Regel liegt die Obergrenze bei etwa 70 bis 75 Gew. %.

Die Partikelgröße des dehydrationsfähigen Füllstoffs liegt zwischen 1 und 1000 µm, insbesondere zwischen 1 und 100 µm. Der dehydrationsfähige Füllstoff kann unmittelbar in das Kunstharz eingelagert sein und/oder in ein Füllmaterial eingelagert sein, das aus einem ausgehärteten Harz gebildet ist und als Granulat oder als Crunchies in das noch auszuhärtende Kunstharz eingelagert wird.

Weiterhin weist die formbare Masse mindestens eine phosphorhaltige Komponente auf, die im ausgehärteten Zustand der Masse bei Temperaturerhöhung ebenfalls brandhemmend chemisch reaktiv ist. Die phosphorhaltige Komponente kann in fester oder flüssiger Phase vorliegen. Sie kann in dem Kunstharz gelöst sein oder als nicht gelöste Flüssigkeit oder Partikel in das Kunstharz eingelagert sein. Alternativ oder ergänzend kann die phosphorhaltige Komponente in ein Füllmaterial eingelagert oder in diesem gelöst sein, das aus einem ausgehärteten Harz gebildet ist und als Granulat oder als Crunchies in das noch auszuhärtende Kunstharz eingelagert wird. Der Anteil der mit der phosphorhaltigen Komponente ausgestatteten Crunchies beträgt zwischen 0 und 60 Gew. % bezogen auf die Masse des hergestellten Formteils, vorzugsweise zwischen 20 und 50 Gew. %. Die Größe dieses Füllmaterials beträgt typisch zwischen 10 und 10000 µm, vorzugsweise zwischen 50 und 6000 µm.

Die phosphorhaltige Komponente kann flüssig und/oder fest unmittelbar in das Kunstharz eingelagert sein und/oder flüssig und/oder fest in den Crunchies eingelagert sein. Vorzugsweise wird jedenfalls ein Teil der phosphorhaltigen Komponente in dem Kunstharz eingelagert sein. Wenn keine Crunchies vorhanden sind, ist die phosphorhaltige Komponente vorzugsweise fest in das Kunstharz eingelagert.

Als phosphorhaltige Komponente kommt ein sogenannter Inertgasbilder in Betracht, der inerte, d.h. nicht brennbare, Gase wie beispielsweise Wasserdampf und/oder Kohlendioxid erzeugt. Die Bildung des Inertgases erfolgt bei Temperaturen, die vorzugsweise unterhalb der Zersetzungstemperatur des Kunstharzes liegen, beispielsweise bei Temperaturen unter 300 Grad Celsius, vorzugsweise unter 200 Grad Celsius. Verwendet werden insbesondere organische oder anorganische Phophate, insbesondere ein Polyphosphat wie beispielsweise Ammoniumpolyphosphat (APP). Vorzugsweise ist die phosphorhaltige Komponente nicht oder jedenfalls nur schwer wasserlöslich. Der Anteil dieser Komponente liegt bei typisch zwischen 0,5 und 15 Gew. % bezogen auf die Masse des hergestellten Formteils, insbesondere zwischen 1 und 10 Gew. % und vorzugsweise zwischen 1,5 und 6 Gew. %. Die Partikelgröße liegt vorzugsweise zwischen 1 und 1000 µm.

Eine weitere Möglichkeit besteht darin, daß die phosphorhaltige Komponente an der Masse im ausgehärteten Zustand, d.h. an dem Formteil, bei Temperaturerhöhung eine brandhemmende Intumeszenzschicht bildet. Hierzu kann vorzugsweise ein Phosphorsäureester verwendet werden, der im Brandfall Phosphorpentoxid bildet, das zu Phosphorsäure/Polyphosphorsäure reagiert, welche die Bildung der Intumeszenzschicht auslöst, indem es bei erhöhter Temperatur auf organisches Material stark dehydrierend und damit veraschend wirkt. Durch die chemische Reaktion können beispielsweise ascheförmige und stark kohlenstoffhaltige Schichten entstehen, die eine brandhemmende Wirkung haben. Vorzugsweise liegt der Siedepunkt der Komponente bei Normaldruck oberhalb 250 Grad Celsius. Der Anteil dieser Komponente liegt bei typisch zwischen 0,5 und 15 Gew. % bezogen auf die Masse des hergestellten Formteils, vorzugsweise zwischen 1 und 6 Gew. %. Beispiele für eine solche Komponente sind Tri-n-butylphosphat (Phosflex 4), Triethylhexylphosphat, Tetraphenyl-m-Phenylenbisphosphat (CR-733-S) oder dergleichen.

Es hat sich als besonders vorteilhaft erwiesen, neben dem thermisch dehydrationsfähigen anorganischen Füllstoff sowohl eine Komponente zur Bildung einer Intumeszenzschicht als auch eine Komponente zur Bildung brandhemmender Gase vorzusehen. Der Anteil des dehydrationsfähigen anorganischen Füllstoffes sowie der phosphorhaltigen Komponenten bestimmt sich dabei neben den Anforderungen an den Brandschutz vor allem auch nach den Anforderungen an der Verarbeitbarkeit der aushärtbaren Masse und der mechanischen Stabilität der hergestellten Formtei le.

Neben den vorstehend genannten Füllstoffen können in das Kunstharz weitere Füllstoffe eingelagert sein, die sowohl partikelförmig als auch faserförmig sein können. Vorzugsweise sind die Füllstoffe anorganischer Natur und beispielsweise oxidischer, silikatischer oder carbonatischer Basis. Als Beispiel sei hier genannt Glas, Calcit, Talk, Aluminiumoxid, Kaolin, Keramik und insbesondere SiO₂-Modifikationen wie Quarz, Cristobalit, Tridymit usw. sowie Mineralien mit einem hohen Quarzanteil von beispielsweise mehr als 40 Gew. %. Die Größe der entsprechenden Partikel oder Fasern kann zwischen 1 und 10 000 µm betragen. Der Anteil dieser weiteren Füllstoffe liegt bei typisch zwischen 40 und 95 Gew. % bezogen auf die Masse des hergestellten Formteils.

Die anorganischen Füllstoffe und/oder phosphorhaltigen Komponenten können zur Verbesserung der mechanischen Eigenschaften der hergestellten Formteile oberflächenbehandelt sein. Hierzu kommt insbesondere eine Silanisierung der Oberfläche in Betracht, wie sie durch handelsübliche Haftvermittler erzielt werden kann.

Die Erfindung betrifft auch ein Formteil hergestellt aus einer formbaren und aushärtbaren Masse wie vorstehend beschrieben. In einer besonderen Ausführungsart der Erfindung ist das Formteil flächig und insbesondere plattenförmig und weist eine mechanische Stabilität auf, durch die das Formteil selbsttragend ist, d.h. insbesondere kein Tragrahmen aus einem anderen Werkstoff erforderlich ist. Dadurch ist das Formteil als Verkleidungselement, Wandelement, Raumteiler oder dergleichen einsetzbar ist. Das Formteil kann aufgrund der in der aushärtbaren Masse enthaltenen Füllstoffe eine vorgebbare dekorative Wirkung aufweisen. Dies beinhaltet insbesondere auch Farberscheinungen, die durch die Einfärbung des Kunstharzes und/oder durch eine Beschichtung der Füllstoffe erreicht werden kann.

Weitere Vorteile, Merkmale und Einzelheiten der Erfindung ergeben sich aus den Unteransprüchen sowie der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine Anordnung zur Prüfung der Brandschutzeigenschaften erfindungsgemäß hergestellter Formteile,
- Fig. 2: zeigt eine Einsatzmöglichkeit erfindungsgemäß hergestellter Formteile, und
- Fig. 3: zeigt in vereinfachter Darstellung eine mögliche Zusammensetzung der erfindungsgemäßen Masse.

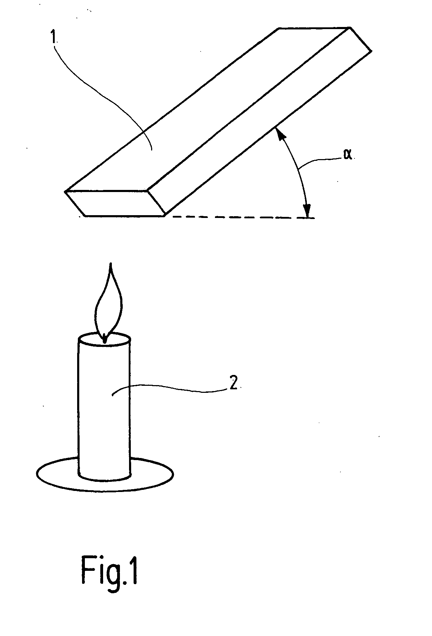

Die Fig. 1 zeigt eine Anordnung zur Prüfung der Brandschutzeigenschaften erfindungsgemäß hergestellter Formteile. Bei dem Formteil 1 handelt es sich um einen quaderförmigen Probenkörper mit den Abmessungen 30 x 10 x 0,5 cm. Das Formteil 1 wird im Winkel α von beispielsweise 45° zur Horizontalen in eine in der Fig. 1 aus Gründen der Übersichtlichkeit nicht dargestellte Haltevorrichtung eingespannt und am unteren Ende mit einem Brenner 2 beflammt. Nach jeweils einer Minute wird der Brenner 2 entfernt und ermittelt, ob das Formteil 1 ohne Beflammung weiterbrennt. Wenn ja, wird die bis dahin aufgelaufene Beflammzeit als Zündzeitpunkt bestimmt.

In einer Versuchsreihe wurden Probekörper getestet, die aus einer formbaren Masse hergestellt waren, wie sie von der Anmelderin zur Herstellung von unter der Marke CRISTALAN vertriebenen Formteilen verwendet wird. Beispielhafte Zusammensetzungen derartiger Formteile sind aus der WO 99/04972 bekannt. Ohne die erfindungsgemäßen phosphorhaltigen Komponenten ergab sich ein Zündzeitpunkt von 3 Minuten. Diese Zeitdauer ließ sich durch die Verwendung phosphorhaltiger Komponenten zum Teil erheblich verlängern, was einer erhöhten Brandschutzwirkung entspricht.

Dabei ergab sich zunächst, daß die Wirksamkeit der phosphorhaltigen Komponenten bei gleicher Konzentration abhängig war vom rechnerischen Gehalt von Phosphorpentoxid in der phosphorhaltigen Komponente. Dies bestätigt den Wirkmechanismus, daß je höher der Gehalt an Phosphorpentoxid ist, desto mehr Phosphorsäure wird im Brandfall gebildet, welche die Bildung der Intumeszenzschicht bewirkt.

Der Phosphorsäureester sollte einen ausreichend hohen Siedepunkt aufweisen, damit er nicht verdampft und einen dichten Rauch bildet, sondern in der Matrix thermisch zersetzt und dabei Phosphorpentoxid bildet, das zusammen mit dem Wasser Phosphorsäure/Polyphosphorsäure bildet, die durch Veraschen der organischen Substanzen die Intumeszenzschicht bildet.

Die CRISTALAN Massen, die auch schon nach dem Stand der Technik einen hohen Anteil an dehydrationsfähigen Füllstoff enthalten, der allerdings aus einem anderen Grund eingesetzt wird, erfüllen die Brandschutznormen erst dann, wenn zusätzlich eine phosphorhaltige Komponente in die Masse bzw. das daraus hergestellte Formteil eingebracht wird, insbesondere in das Harz und/oder die Crunchies.

Verwendet man beispielsweise für eine übliche CRISTALAN Masse als flüssige phosphorhaltige Komponente in dem Kunstharz den unter der Artikelbezeichnung CR-733-S von der Firma Nordmann, Rassmann GmbH & Co. KG vertriebenen Phosphorsäureester mit einem ausreichend hohen Anteil lassen sich dadurch die zum Anmeldezeitpunkt geltenden Brandschutznormen erfüllen. Der Anteil des Harzes einschließlich der phosphorhaltigen Komponente beträgt in diesem Beispiel 26 %, der Anteil von anorganischem Füllstoff (keine Crunchies), nämlich Aluminiumtrihydroxid, beträgt 13 %, der Anteil von Crunchies beträgt 52 %, wobei diese Crunchies keine phosphorhaltige Komponente aufweisen, und der verbleibende Anteil wird von Hilfsstoffen gebildet, wie beispielsweise Farbe, Vernetzer, Peroxide zum Starten der Polymerisation usw.; alle Prozentangaben betreffen Gewichtsprozente bezogen auf die gesamte formbare Masse, die auch der Masse des hergestellten Formteils entspricht. So beträgt beispielsweise der Zündzeitpunkt nach der französischen Norm NFP 92501 in Abhängigkeit des Anteils von CR-733-S folgende Werte:

| Anteil CR-733-S in Gew. % | Zündzeitpunkt in Minuten |
|---|---|
| 0 | 3 |
| 1,75 | 6 |
| 4 | 8 |
| 5 | 10 |
| 6 | 13 |

Grundsätzlich gilt dabei, je höher der Wert für den Zündzeitpunkt, desto höher der erzielte Brandschutzeffekt. Ausreichend hohe Zündzeitpunkte zur Erfüllung des Standards M2 der französischen Norm ergeben sich somit für die übliche CRISTALAN Masse ab Anteilen des CR-733-S von etwa 5 Gew.%.

In einer CRISTALAN Masse ohne Crunchies kann bei Verwendung eines Ammoniumpolyphosphats als feste phosphorhaltige Komponente in dem Kunstharz, wie es beispielsweise unter der Artikelbezeichnung APP-1 von der Firma Nordmann, Rassmann GmbH & Co. KG angeboten wird, mit einem Anteil von mehr als 1,5 Gew. %, insbesondere etwa mindestens 2 bis 2,5 Gew. %, der Standard B1 der deutsche Brandschutznorm gemäß DIN 4102 in der zum Anmeldetag der vorliegenden Anmeldung gültigen Fassung erfüllt werden. Diese Brandschutznorm nach DIN hebt unter anderem auf die Rauchgastemperatur, die Rauchgasdichte, die Restlänge des Probenkörpers sowie auf die Weiterbrennzeit ab. Die Beflammdauer beträgt nach der Brandschutznorm 10 Minuten. Der Anteil des Harzes ausschließlich der phosphorhaltigen Komponente beträgt in diesem Beispiel 35 Gew. %, davon ein Fünftel als Prepolymer, der Anteil von anorganischem Füllstoff, nämlich Aluminiumtrihydroxid, beträgt 60 Gew. %, der Anteil von APP-1 beträgt 2,5 Gew. %, und der verbleibende Anteil wird von Hilfsstoffen gebildet, wie beispielsweise Farbe, Vernetzer, Peroxide zum Starten der Polymerisation usw.

Grundsätzlich lassen sich günstige Ergebnisse bei einer Kombination von Ammoniumpolyphosphat mit einem Anteil zwischen 1,5 und 5 Gew. % und Phosphorsäureester CR 733-S mit einem Anteil zwischen 1,5 und 6 Gew. % erzielen, jeweils bezogen auf die Masse der hergestellten Formteils. So läßt sich bei einer CRISTALAN Masse mit einer Zusammensetzung wie im eingangs genannten Beispiel mit Crunchies mit einer Kombination von 2,5 Gew. % CR-733-S und 4 Gew. % APP-1 der Standard M2 der französischen Norm erfüllen.

Bei einer CRISTALAN Masse mit ebenfalls 26 Gew. % Harz und 13 Gew. % Aluminiumtrihydroxid sowie insgesamt 52 Gew. % Crunchies läßt sich mit einer Kombination von 4 Gew. % CR-733-S flüssig in der Matrix, sowie 2,5 Gew. % CR-733-S flüssig und 5 Gew. % APP-1 fest in den Crunchies, der Standard M2 der französischen Norm mit eine Zündzeitpunkt von 12 Minuten erfüllen, wobei nur 22 Gew. % der Crunchies mit einer phosphorhaltigen Komponente ausgestattet werden und 30 Gew. % der Crunchies keine phosphorhaltige Komponente aufweisen.

Mit einer CRISTALITE Masse, bestehend aus 11,5 Gew. % Harz, 69 Gew. % harten und nicht dehydrationsfähigen Füllstoffen wie beispielsweise Quarz, sowie einer Kombination von 8 Gew. % Aluminiumtrihydroxid, 11 Gew. % EXOLIT (fest), wie es von der Clariant GmbH angeboten wird, und 0,5 Gew. % PHOSFLEX 4 (flüssig), wie es von Akzo angeboten wird, läßt sich der Standard B1 der deutschen Brandschutznorm DIN 4102 erfüllen.

Andere und zum Teil nicht phosphorhaltige Komponenten führen zwar auch zu einer starken Reduzierung der Weiterbrennzeit, allerdings verbunden mit anderweitigen Nachteilen wie beispielsweise einer Wasserlöslichkeit oder unerwünschten oder jedenfalls nicht in jedem Anwendungsfall tolerierbaren Farberscheinungen.

Vorzugsweise sind die verwendeten und den Brandschutz bewirkenden Komponenten frei von Halogenen, wodurch eine über die unmittelbare Brandwirkung hinausgehende Gefährdung durch die Entwicklung giftiger Rauchgase ausgeschlossen ist.

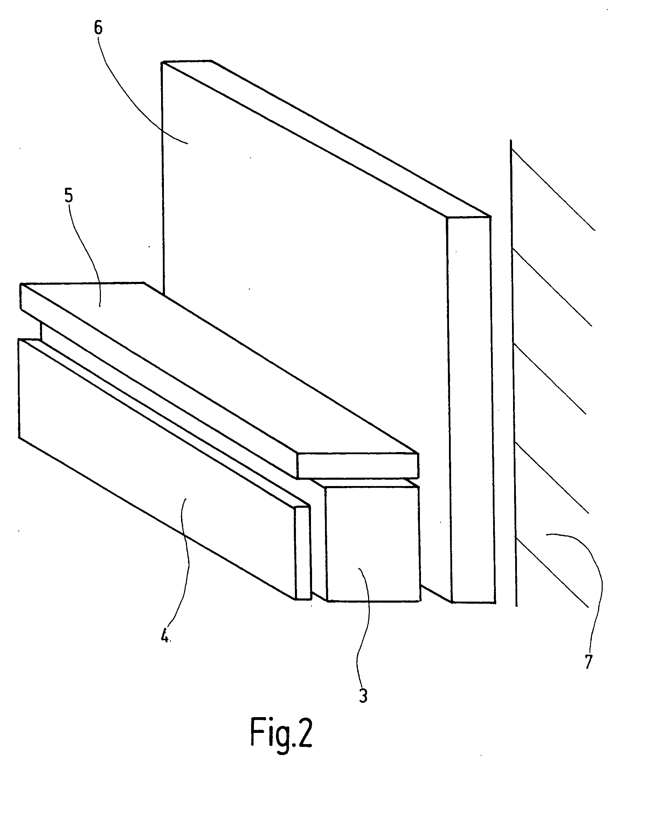

Die Fig. 2 zeigt eine Einsatzmöglichkeit erfindungsgemäß hergestellter Formteile. So kann beispielsweise eine Sitzbank 3 aus Sichtbeton oder einem sonstigen wenig dekorativen Werkstoff mit einem im wesentlichen in vertikaler Ausrichtung aufgestellten ersten Formteil 4, das im wesentlichen langgestreckt plattenförmig ausgebildet ist, an seiner Frontseite verkleidet werden. Auf der Sitzfläche ist ein zweites Formteil 5 angebracht, das ebenfalls langgestreckt plattenförmig ist. Die Befestigung des ersten und zweiten Formteils 4, 5 an der Sitzbank 3 kann durch alle aus dem Stand der Technik bekannten Möglichkeiten erfolgen. Die mechanische Stabilität der ersten und zweiten Formteile 4, 5 ist dabei ausreichend, um einerseits die Zahl der Befestigungsstellen möglichst gering zu halten und andererseits den zu erwartenden mechanischen Beanspruchungen in Abhängigkeit des Anwendungsfalles standzuhalten.

Als drittes Formteil 6 wird ein vertikal angeordnetes plattenförmiges Element eingesetzt, welches an der Wand 7 festlegbar ist. Insbesondere die Formteile, wie im vorliegenden Fall das dritte Formteil 6, welche eine vertikale Ausrichtung aufweisen und in der Höhe verhältnismäßig langgestreckt sind, bedürfen einer brandhemmenden Ausführung gemäß der vorliegenden Erfindung. Die mechanische und/oder chemische Widerstandsfähigkeit sowie das visuelle und haptische Erscheinungsbild der Formteile 4, 5, 6 kann durch die Art und Menge der Füllstoffe eingestellt werden.

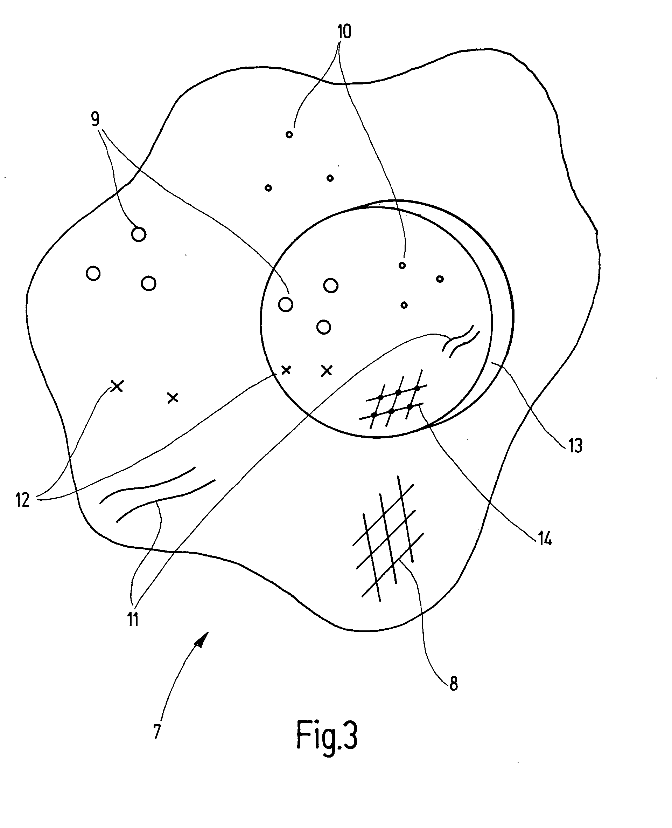

Die Fig. 3 zeigt in vereinfachter Darstellung eine mögliche Zusammensetzung der erfindungsgemäßen Masse 7, die im dargestellten Zustand noch formbar sein soll. Die Masse 7 weist auf das im dargestellten Zustand noch nicht ausgehärtete Kunstharz 8 sowie einen ersten anorganischen Füllstoff 9 in Form von Quarzpartikeln und/oder einen zweiten anorganischen Füllstoff 10 in Form von Partikeln aus Aluminiumtrihydroxid. Beide anorganische Füllstoffe 9, 10 sind in dem Kunstharz 8 eingelagert.

Außerdem kann die Masse 7 eine erste phosphorhaltige Komponente 11 aufweisen, die in flüssiger Form als Phosphorsäureester in dem Kunstharz 8 gelöst oder eingelagert ist, und/oder eine zweite phosphorhaltige Komponente 12 aufweisen, die in fester Form als Ammoniumpolyphosphat in dem Kunstharz 8 eingelagert ist.

Darüber hinaus weist die Masse 7 als weiteres Füllmaterial ein Granulat 13 auf, das ein ausgehärtetes Harz 14 aufweisen, mit einen ersten anorganischen Füllstoff 9 in Form von Quarzpartikeln, und/oder einen zweiten anorganischen Füllstoff 10 in Form von Partikeln aus Aluminiumtrihydroxid, und/oder eine erste phosphorhaltige Komponente 11, die in flüssiger Form als Phosphorsäureester in dem Harz 14 gelöst oder eingelagert ist, und/oder eine zweite phosphorhaltige Komponente 12, die in fester Form als Ammoniumpolyphosphat in dem Harz 14 eingelagert ist. Im Ausführungsbeispiel ist das Granulat scheibenförmig, kann aber jede beliebige Oberfläche und insbesondere auch unregelmäßige Oberflächen aufweisen.

## Patentansprüche

1. Formbare Masse (7), die zum Herstellen von Formteilen (1, 4, 5, 6) aushärtbar ist, wobei die Masse (7) ein aushärtbares Kunstharz (8) aufweist und mindestens einen in das Kunstharz (8) eingelagerten partikelförmigen anorganischen Füllstoff (9, 10) aufweist, **dadurch gekennzeichnet, daß** im ausgehärteten Zustand der Masse (7) mindestens ein Teil (10) des anorganischen Füllstoffs (9, 10) bei Temperaturerhöhung noch unterhalb der Zersetzungstemperatur des Kunstharzes (8) brandhemmend chemisch reaktiv ist, daß die Masse (7) weiterhin mindestens eine phosphorhaltige Komponente (11, 12) aufweist, und daß die phosphorhaltige Komponente (11, 12) im ausgehärteten Zustand der Masse (7) bei Temperaturerhöhung noch unterhalb der Zersetzungstemperatur des Kunstharzes (8) brandhemmend chemisch reaktiv ist.

2. Masse (7) nach Anspruch 1, **dadurch gekennzeichnet, daß** aufgrund der phosphorhaltigen Komponente (11, 12) an der Masse (7) im ausgehärteten Zustand bei Temperaturerhöhung eine brandhemmende Intumeszenzschicht bildbar ist.

3. Masse (7) nach Anspruch 1 oder 2, **dadurch gekennzeichnet, daß** aufgrund der phosphorhaltigen Komponente (11, 12) bei Temperaturerhöhung der Masse (7) im ausgehärteten Zustand brandhemmende Reaktionsgase bildbar sind.

4. Masse (7) nach einem der Ansprüche 1 bis 3, **dadurch gekennzeichnet, daß** die Masse (7) zwei phosphorhaltige Komponenten (11, 12) aufweist.

5. Masse (7) nach einem der Ansprüche 1 bis 4, **dadurch gekennzeichnet, daß** die phosphorhaltige Komponente (11, 12) einen Phosphorsäureester aufweist.

6. Masse (7) nach Anspruch 5, **dadurch gekennzeichnet, daß** der Anteil des Phosphorsäureesters in der aushärtbaren Masse (7) zwischen 0,1 und 15 Gew. % bezogen auf das Gewicht des hergestellten Formteils, vorzugsweise zwischen 2 und 6 Gew. % beträgt.

7. Masse (7) nach einem der Ansprüche 1 bis 6, **dadurch gekennzeichnet, daß** die phosphorhaltige Komponente (11, 12) ein organisches oder anorganisches Phosphat aufweist.

8. Masse (7) nach Anspruch 7, **dadurch gekennzeichnet, daß** die phosphorhaltige Komponente (11, 12) ein Polyphosphat aufweist, insbesondere ein Ammoniumpolyphosphat.

9. Masse (7) nach Anspruch 7 oder 8, **dadurch gekennzeichnet, daß** der Anteil des Polyphosphats zwischen 0,1 und 15 Gew. % beträgt bezogen auf das Gewicht des hergestellten Formteils, insbesondere zwischen 1 und 10 Gew. % und vorzugsweise zwischen 1,5 und 6 Gew. %.

10. Masse (7) nach einem der Ansprüche 1 bis 9, **dadurch gekennzeichnet, daß** die Masse (7) als Füllmaterial ein Granulat (13) aufweist, und daß die phosphorhaltige Komponente (11, 12) mindestens teilweise in dem Granulat (13) eingelagert ist.

11. Masse (7) nach einem der Ansprüche 1 bis 10, **dadurch gekennzeichnet, daß** im ausgehärteten Zustand der Masse (7) von dem anorganischen Füllstoff (10) bei Temperaturerhöhung Wasser abspaltbar ist.

12. Masse (7) nach einem der Ansprüche 1 bis 11, **dadurch gekennzeichnet, daß** die Masse (7) einen ersten, nicht brandhemmend chemisch reaktiven anorganischen Füllstoff (9) aufweist, insbesondere einen ersten Füllstoff (9) mit einer Mohshärte von mehr als fünf, und daß der Anteil des brandhemmend chemisch reaktiven zweiten anorganischen Füllstoffs (10) mindestens 5 Gew. % beträgt bezogen auf das Gewicht des hergestellten Formteils, vorzugsweise mindestens 8 Gew. %, und insbesondere etwa 11 Gew. % beträgt.

13. Masse (7) nach einem der Ansprüche 1 bis 12, **dadurch gekennzeichnet, daß** das Kunstharz ein Acrylharz ist.

14. Masse (7) nach Anspruch 13, **dadurch gekennzeichnet, daß** das Acrylharz polymerisierbare Acrylsäuremonomere aufweist.

15. Formteil (1, 4, 5, 6) hergestellt aus einer formbaren und aushärtbaren Masse (7), **dadurch gekennzeichnet, daß** das Formteil (1, 4, 5, 6) aus einer aushärtbaren Masse (7) nach einem der Ansprüche 1 bis 14 hergestellt ist.

16. Formteil (1, 4, 5, 6) nach Anspruch 15, **dadurch gekennzeichnet, daß** das Formteil (1, 4, 5, 6) plattenförmig ist.

17. Formteil (1, 4, 5, 6) nach Anspruch 15 oder 16, **dadurch gekennzeichnet, daß** das Formteil (1, 4, 5, 6) eine mechanische Stabilität aufweist, durch die das Formteil (1, 4, 5, 6) selbsttragend ist und als Verkleidungselement, Wandelement, Raumteiler oder dergleichen einsetzbar ist.

18. Formteil (1, 4, 5, 6) nach einem der Ansprüche 15 bis 17, **dadurch gekennzeichnet, daß** das Formteil (1, 4, 5, 6) aufgrund der in der aushärtbaren Masse (7) enthaltenen Füllstoffe eine vorgebbare dekorative Wirkung aufweist.
